# EUROPEAN PATENT SPECIFICATION

(11) **EP 3 470 241 B1**
(45) Date of publication and mention of the grant of the patent: **20.05.2020**
(21) Application number: 17813048.0
(22) Date of filing: 09.05.2017
(51) Int. Cl.: B60C 3/04, B60C 3/00, B60C 9/18, B60C 11/00, B60C 13/00

(54) **THREE-WHEELED VEHICLE TIRE**
REIFEN FÜR DREIRÄDRIGES FAHRZEUG
PNEU DESTINÉ À UN VÉHICULE À TROIS ROUES

(30) Priority: 13.06.2016 JP 2016117040
(43) Date of publication of application: 17.04.2019
(73) Proprietor: Bridgestone Corporation, Tokyo 104-8340 (JP)
(72) Inventor: MURAMATSU Naoya, Tokyo 104-8340 (JP)
(74) Representative: Oxley, Robin John George
(86) International application number: PCT/JP2017/017563
(87) International publication number: WO 2017/217143

(56) References cited:
- EP-A2- 2 332 746
- JP-A- H08 164 709
- JP-A- 2001 315 506
- JP-A- 2002 036 812
- JP-A- 2012 240 574
- JP-A- 2014 133 439

## Description

### TECHNICAL FIELD

The present invention relates to a three-wheeled vehicle tire (hereinafter, also simply referred to as "tire"). More particularly, the present invention relates to a three-wheeled vehicle tire whose tread surface has an improved radius of curvature, specifically a three-wheeled motor vehicle tire.

### BACKGROUND ART

Generally speaking, in three-wheeled vehicles, there are two types of vehicles that are constituted by two front wheels and one rear wheel or one front wheel and two rear wheels. Among these three-wheeled vehicles, vehicles of a type which makes turns by tilting a tire(s) during turning exhibit unique vehicle body behavior different from that of vehicles of a type which does not tilt any tire during turning. Accordingly, tires used in these two types of vehicles require different performance. For instance, a tire applied to the latter type is provided with hardly any camber angle, while a tire applied to the former type is provided with a camber angle; therefore, these tires are also different in terms of the region of use in the tire crown portion.

Moreover, in three-wheeled vehicles, since the load applied per wheel is smaller on the two-wheel side than on the single-wheel side, there is a problem that the moment called "OTM" (Over-Turning Moment), which acts when a tire is brought back to an upright position after being tilted for turning, is not sufficiently obtained, and the steering performance is consequently deteriorated.

As prior art relating to a three-wheeled vehicle tire, for example, Patent Document 1 discloses a technology in which, in a three-wheeled motor vehicle tire to be mounted on two rear wheels of a three-wheeled motor vehicle, prescribed grooves are formed on the tread surface and the radius of curvature of the tread surface is controlled to be 75 to 200% of a nominal cross-sectional width of the tire for the purpose of improving the wear resistance. Reference is also made to JP H08-164709 A, JP 2002-036812 A and EP 2332746 A2, whereby JP 2002-036812A is showing the preamble of claim 1.

### RELATED ART DOCUMENT

### PATENT DOCUMENT

[Patent Document 1] JP2001-315506A (Claims, etc.)

### SUMMARY OF THE INVENTION

### PROBLEMS TO BE SOLVED BY THE INVENTION

However, the technology disclosed in Patent Document 1 relates to, among three-wheeled vehicle tires, those tires that are applied to vehicles of a type which makes turns without tilting any tire during turning and, in this case, the above-described problem of deterioration in steering performance does not occur. In this manner, the behavior of three-wheeled vehicles of a type which makes turns by tilting a tire(s) during turning has not been sufficiently examined until now.

In view of the above, an object of the present invention is to provide a tire to be mounted on a three-wheeled vehicle of a type that makes turns by tilting a tire(s) during turning, with which the steering performance in turning can be improved.

### MEANS FOR SOLVING THE PROBLEMS

The present inventor intensively studied to discover that the above-described problem can be solved by adopting the following constitutions, thereby completing the present invention.

That is, the present invention is a three-wheeled vehicle tire to be mounted on a two-wheel side of a three-wheeled vehicle that is constituted by two front wheels and one rear wheel or one front wheel and two rear wheels and has a mechanism for tilting a tire(s) during turning,
wherein a radius of curvature (Rc) of a tread surface in a center region is in a range of greater than 55% but 70% or less of a tire maximum width (W) where, on the tread surface at a tire widthwise cross-section of each tire in a load-free state that was assembled with a rim and inflated to a prescribed internal pressure, a region that is centered at the tire equator and comes into contact with the ground during straight running is defined as the center region and regions on each side of the center region are defined as shoulder regions, and
the height (h2) of the bead fillers (4) is controlled at 40% or less of the side height (h1); wherein
the side height (h1) is the height from a bead baseline (BL) to a tire maximum width position; and
the height (h2) of the bead fillers (4) means the height along the tire radial direction from a tire radial-direction outer end (1a) of the respective bead cores (1) in contact with the bead fillers (4) to a tire radial-direction outer end (4a) of the respective bead fillers (4);
characterized in that:
the thickness of the side wall portions (12) is 4 to 6 mm, wherein the thickness of the side wall portions (12) means the thickness of each side wall portion (12) that is measured in a direction perpendicular to the tire surface at a position of a tire radial-direction midpoint of the side height (h1) ± 10% of the side height (h1).

In the present invention, a ratio between the radius of curvature (Rc) of the tread surface in the center region and a radius of curvature (Rs) of the tread surface in the shoulder regions, Rc/Rs, is preferably not higher than 145%.

In the present invention, unless otherwise specified, the dimensions of a tire each refer to a value measured for the tire assembled with a rim defined by an industrial standard that is valid in each area where the tire is manufactured and used, the measurement being performed in a state where the tire is inflated to an internal pressure prescribed by the industrial standard with no load. The "industrial standard" refers to, for example, JATMA (Japan Automobile Tyre Manufacturers Association) Year Book in Japan, ETRTO (European Tyre and Rim Technical Organisation) Standard Manual in Europe, or TRA (The Tire and Rim Association Inc.) Year Book in the U.S.

### EFFECTS OF THE INVENTION

According to the present invention, a three-wheeled vehicle tire which can improve the steering performance in turning when mounted on a three-wheeled vehicle of a type that makes turns by tilting a tire(s) during turning can be realized.

### BRIEF DESCRIPTION OF THE DRAWINGS

FIG. 1 is a widthwise cross-sectional view that illustrates one example of a three-wheeled vehicle tire of the present invention.
FIG. 2 is a graph showing the results of evaluating the vertical spring at a camber angle (CA) of 0° in Examples.
FIG. 3 is a graph showing the results of evaluating the vertical spring at a camber angle (CA) of 40° in Examples.

### MODE FOR CARRYING OUT THE INVENTION

Embodiments of the present invention will now be described in detail referring to the drawings.

The three-wheeled vehicle tire of the present invention is a tire to be mounted on a two-wheel side of a three-wheeled vehicle that is constituted by two front wheels and one rear wheel or one front wheel and two rear wheels and has a mechanism for tilting a tire(s) during turning.

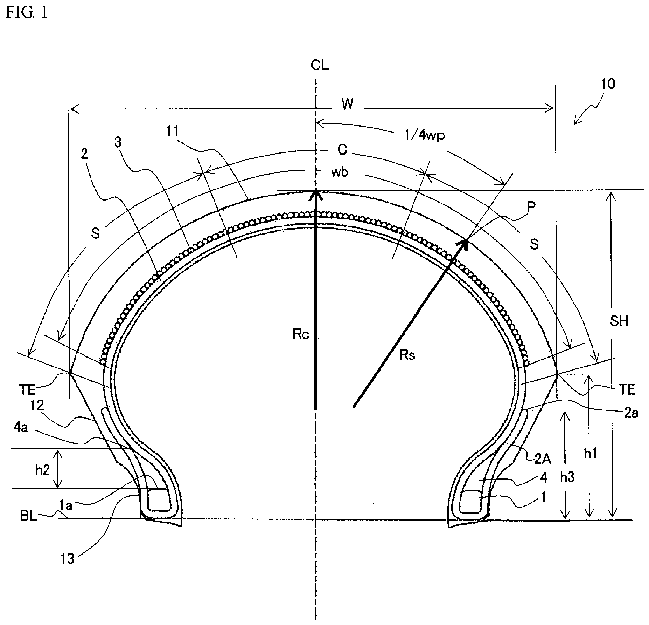

FIG. 1 is a widthwise cross-sectional view that illustrates one example of a three-wheeled vehicle tire of the present invention. An illustrated tire 10 includes a tread portion 11; a pair of side wall portions 12 each extending from the respective widthwise ends thereof; and a pair of bead portions 13, and has, as a skeleton, a single carcass ply 2 which toroidally extends between a pair of bead cores 1 each embedded in the pair of the bead portions 13. Further, a single spiral belt 3 is arranged on the tire radial-direction outer side of the carcass ply 2 in the crown portion.

In the tire of the present invention, it is important that a radius of curvature (Rc) of a tread surface in a center region (C) be in a range of greater than 55% but 70% or less of a tire maximum width (W) where, on the tread surface corresponding to the surface of the tread portion 11 at a tire widthwise cross-section, a region that is centered at the tire equator (CL) and comes into contact with the ground during straight running is defined as the center region (C) and regions on each side of the center region (C) are defined as shoulder regions (S). In other words, although this value is about 50% in those tires conventionally applied to three-wheeled vehicles, a larger value is adopted in the present invention. This leads to an increase in OTM as compared to before at the same camber angle and, therefore, the steering performance can be improved as a result.

The radius of curvature (Rc) of the tread surface in the center region (C) is required to be in a range of greater than 55% but 70% or less of the tire maximum width (W), and it is preferably greater than 55% but 63% or less, more preferably 56% to 59%. When the radius of curvature (Rc) is 55% or less of the tire maximum width (W), a sufficient OTM is not obtained, whereas when the radius of curvature (Rc) is greater than 70% of the tire maximum width (W), an excessively large OTM deteriorates the steering performance; therefore, the expected effects of the present invention cannot be attained in both of these cases. It is noted here that, in the present invention, the value of the radius of curvature measured at the tire equator (CL) can be used as the radius of curvature (Rc) of the tread surface in the center region (C).

Further, in the present invention, the ratio between the radius of curvature (Rc) of the tread surface in the center region (C) and the radius of curvature (Rs) of the tread surface in the shoulder regions (S), Rc/Rs, is preferably not higher than 145%. When the ratio Rc/Rs is higher than 145%, the steering performance is deteriorated due to an excessively large difference in curvature between the center region and the shoulder regions. The ratio Rc/Rs is preferably 100% to 145%, more preferably 115% to 130%. It is preferred to control the ratio Rc/Rs to be 100% or higher since a sufficient OTM is thereby obtained. It is noted here that, in the present invention, as the radius of curvature (Rs) of the tread surface in the shoulder regions (S), the value of the radius of curvature measured at a point (P) that is away from the tire equator (CL) by 1/4 of a peripheral length (wp) of the tread surface toward the tire width-direction outer side can be used. The "peripheral length" of the tread surface is the length measured along the tread surface from one tread end (TE) to the other tread end (TE) in the tire width direction at a tire widthwise cross-section.

For example, in the case of a tire having an aspect ratio of 70%, when the radius of curvature (Rc) of the tread surface in the center region (C) is 60% of the tire maximum width (W) and the ratio Rc/Rs is 100%, a side height (h1), which is the height from a bead baseline (BL) to a tire maximum width position, is about 61% of the tire cross-sectional height (section height: SH), so that a vertical spring-reducing effect can also be attained.

The term "bead baseline (BL)" used herein means a straight line that is parallel to the tire axis passing through the diameter of a rim defined by the above-described industrial standard at a tire widthwise cross-section. Further, the term "tire cross-sectional height (section height: SH)" used herein refers to 1/2 of the difference between the tire outer diameter and the diameter of a rim defined by the above-described industrial standard.

In the tire of the present invention, the expected effects of the present invention can be attained as long as the radius of curvature of the tread surface satisfies the above-described conditions, and the structures of the respective portions, the arrangement of members, the materials to be used and the like are not particularly restricted.

The carcass ply 2 is composed of a rubberized layer of reinforcing cords. It is required that at least one carcass ply 2 be arranged, and two or more carcass plies 2, for example, one to three carcass plies 2 may be arranged. In the illustrated example, both ends of the carcass ply 2 are folded around each bead core 1 from the inside to the outside of the tire and the carcass ply 2 is thereby anchored; however, the ends of the carcass ply 2 may each be sandwiched and anchored by a bead wire, and the mode of anchoring the carcass ply 2 is not particularly restricted. The angle of the reinforcing cords of the carcass ply 2 is 0° to 25° with respect to the tire width direction in the case of a radial tire, or 40° to 70° with respect to the tire width direction in the case of a bias tire. As the reinforcing cords of the carcass ply 2, organic fiber cords of, for example, aliphatic polyamide (nylon), aromatic polyamide (aramid), rayon, or polyester such as polyethylene naphthalate (PEN) or polyethylene terephthalate (PET), are normally used.

In the illustrated tire, a single spiral belt 3, which is composed of a rubberized layer of reinforcing cords wound substantially in the tire circumferential direction, is arranged on the tire radial-direction outer side of the carcass ply 2 in the crown portion; however, the present invention is not restricted to this mode. Two or more spiral belts 3 may be arranged as well. Alternatively, in place of the spiral belt 3, an inclined belt that is composed of a rubberized layer of reinforcing cords arranged at an inclination angle of 15° to 30° with respect to the tire circumferential direction may be arranged. The inclined belt may be arranged singly, or two or more thereof may be arranged. For example, one to three inclined belts can be arranged and, when two or more inclined belts are arranged, they are intersected with each other at least partially. Usually, two inclined belts are arranged in an intersecting manner with each other. As the reinforcing cords of the spiral belt 3 or inclined belt, steel cords can be used in addition to organic fiber cords of, for example, aliphatic polyamide (nylon), aromatic polyamide (aramid), rayon, or polyester such as polyethylene naphthalate (PEN) or polyethylene terephthalate (PET).

In the present invention, particularly, as illustrated, a structure in which a single carcass ply 2 constitutes a skeleton and the crown portion is reinforced with a single spiral belt 3, specifically a spiral belt 3 composed of steel cords, is preferred since such a structure can reduce the vertical spring and contributes to an increase in OTM. Those tires that are conventionally applied to two-wheeled vehicles and three-wheeled vehicles generally have a structure in which two carcass plies constitute a skeleton and the crown portion is reinforced with a single spiral belt composed of steel cords or two inclined belts composed of organic fibers; however, in a three-wheeled vehicle, as described above, since the load applied per wheel is smaller on the two-wheel side, the above-described structure in which a single carcass ply is used as a skeleton member and the crown portion is reinforced with a single spiral belt is advantageous.

Three-wheeled vehicles have a drawback in that the riding comfort is likely to be deteriorated since, on the two-wheel side, the tire spring constant is doubled due to the combination of two wheels; however, by improving the constitution of the tire members as described above and thereby reducing the vertical spring, not only the above-described effect of suppressing vibrations during turning but also an effect of improving the riding comfort can be attained.

Further, in the tire of the present invention, the thickness of the side wall portions 12 is 4 to 6 mm. In conventional three-wheeled vehicle tires, the side wall portions 12 generally have a thickness of about 7 to 9 mm; however, by reducing the thickness as compared to such conventional tires, the vertical spring can be further reduced. The smaller the thickness of the side wall portions 12, the more preferred it is in terms of contribution to reduction in vertical spring; however, a thickness of less than 4 mm is not preferred since it causes a reduction in durability. In the present invention, the "thickness of the side wall portions 12" means the thickness of each side wall portion 12 that is measured in a direction perpendicular to the tire surface at a position of a tire radial-direction midpoint of the side height (h1) ± 10% of the side height (h1).

In order to achieve the above-described reduction in the thickness of the side wall portions 12, it is effective to reduce a height (h2) of bead fillers 4 arranged on the tire radial-direction outer side of the respective bead cores 1. Specifically, the height (h2) of the bead fillers 4 is controlled at 40% or less, preferably 30% or less, of the side height (h1). It is noted here that the "height (h2) of the bead fillers 4" means the height along the tire radial direction from a tire radial-direction outer end (1a) of the respective bead cores 1 in contact with the bead fillers 4 to a tire radial-direction outer end (4a) of the respective bead fillers 4.

Still further, in the present invention, also from the standpoint of further reducing the vertical spring, when the carcass ply 2 is folded back as illustrated, the height (h3) of a folded part 2A is preferably 75% or less, more preferably 65% or less, of the side height (h1). However, the durability is deteriorated when the height (h3) of the folded part 2A is 50% or less of the side height (h1), the height (h3) is preferably greater than 50% of the side height (h1). It is noted here that the "height (h3) of the folded part 2A" of the carcass ply 2 means the height from the bead baseline (BL) to a tire radial-direction outer end (2a) of the folded part 2A of the carcass ply 2.

Yet still further, in the present invention, the arrangement width (wb) of a belt, which is the spiral belt 3 in the illustrated example, is preferably 85% or less, more preferably 80% or less, of the peripheral length (wp) of the tread surface. By this, the tire rigidity can be reduced and the riding comfort can thus be improved. It is noted here that the "arrangement width (wb)" of the belt refers to the length measured along the tread surface between the tire widthwise ends of the belt.

The tire of the present invention is a three-wheeled vehicle tire to be mounted on a two-wheel side of a three-wheeled vehicle, particularly a three-wheeled motor vehicle, and can be applied as both a front tire and a rear tire; however, the tire of the present invention is particularly useful as two front tires of a three-wheeled vehicle of a type having two front wheels and one rear wheels. Moreover, the present invention can also be applied to tires having either a radial structure or bias structure.

### EXAMPLES

The present invention will now be described in more detail by way of examples thereof.

In accordance with the conditions shown in Table below, three-wheeled vehicle tires to be mounted as front tires on a three-wheeled motor vehicle that is constituted by two front wheels and one rear wheel and has a mechanism for tilting the tires during turning were produced. As for the tire size, the front tires had a size of 120/70R17M/C and the rear tire had a size of 190/55R17M/C. It is noted here that, on the tread surface at a widthwise cross-section of each tire in a load-free state that was assembled with a rim and inflated to a prescribed internal pressure, the region that is centered at the tire equator and comes into contact with the ground during straight running is defined as a center region (C), and the regions on each side of the center region are defined as shoulder regions (S).

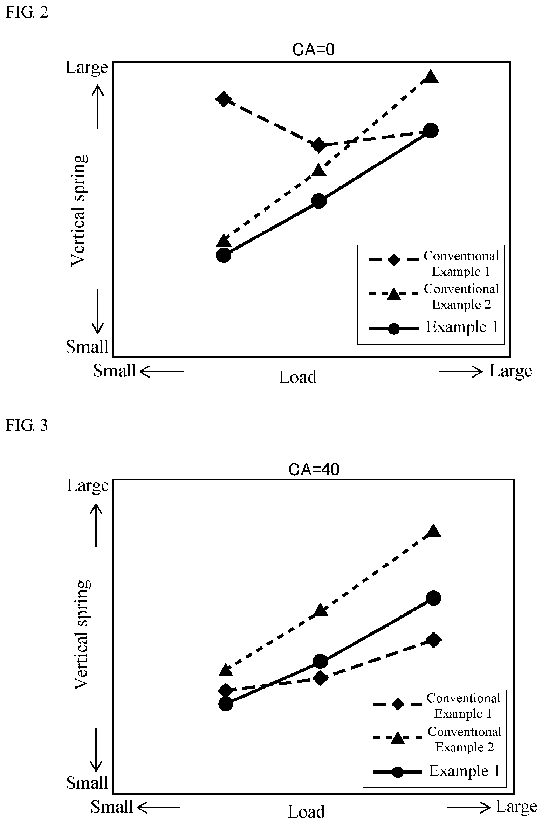

For each of the thus obtained test tires, the OTM and the vertical spring were evaluated. The results thereof are presented as indices, taking the values determined for Conventional Example 1 as 100. The results are shown together in Table below. Further, in FIGS. 2 and 3, graphs showing the relationship of the vertical spring with respect to the load at camber angles (CA) of 0° and 40°, respectively, are provided for Conventional Examples 1 and 2 and Example 1.

**[Table 1]**

| | Conventional Example 1 | Conventional Example 2 | Example 1 | Example 2 |
|---|---|---|---|---|
| Carcass ply | Rayon Two carcass plies | Rayon Two carcass plies | Nylon Single carcass ply | Nylon Single carcass ply |
| Belt | Two aramid inclined belts (± 20° with respect to circumferentia l direction) | Single steel spiral belt | Single steel spiral belt | Single steel spiral belt |
| Thickness of side wall portion (mm) | 7 | 7 | 5.5 | 5.5 |
| Rc/W (%)^{*1} | 52 | 54 | 59 | 59 |
| Rc/Rs (%)^{*2} | 82 | 138 | 145 | 100 |
| h1/SH (%)^{*3} | 44 | 44 | 44 | 55 |
| h2/h1 (%)^{*4} | 46 | 43 | 33 | 26 |
| h3/h1 (%)^{*5} | 81 | 81 | 81 | 65 |
| wb/wp (%)^{*6} | - | 85 | 85 | 85 |
| OTM (index) | 100 | 105 | 107 | 119 |
| Vertical spring (index) | 100 | 70 | 60 | 56 |

| | | | | |
|---|---|---|---|---|
| ^{*1)} Indicates the ratio between the radius of curvature (Rc) of the tread surface in the center region and the tire maximum width (W), Rc/W, in percentage. ^{*2)} Indicates the ratio between the radius of curvature (Rc) of the tread surface in the center region and the radius of curvature (Rs) of the tread surface in the shoulder regions, Rc/Rs, in percentage. ^{*3)} Indicates the ratio between the side height (h1) and the tire cross-sectional height (SH), h1/SH, in percentage. ^{*4)} Indicates the ratio between the height (h2) of the bead fillers and the side height (h1), h2/h1, in percentage. ^{*5)} Indicates the ratio between the height (h3) of the folded parts of the carcass ply and the side height (h1), h3/h1, in percentage. ^{*6)} Indicates the ratio between the arrangement width (wb) of the spiral belt and the peripheral length (wp) of the tread surface, wb/wp, in percentage. | | | | |

As shown in Table above, it was confirmed that high OTM was attained in Examples. Further, in Examples, the vertical spring was largely reduced as well.

### DESCRIPTION OF SYMBOLS

- 1:: bead core
- 1a:: tire radial-direction outer end of bead core
- 2:: carcass ply
- 2A:: folded part of carcass ply
- 2a:: tire radial-direction outer end of folded part of carcass ply
- 3:: spiral belt
- 4:: bead filler
- 4a:: tire radial-direction outer end of bead filler
- 10:: three-wheeled vehicle tire
- 11:: tread portion
- 12:: side wall portion
- 13:: bead portion

## Claims

1. A three-wheeled vehicle tire (10) to be mounted on a two-wheel side of a three-wheeled vehicle that is constituted by two front wheels and one rear wheel or one front wheel and two rear wheels and comprises a mechanism for tilting a tire(s) during turning,
wherein a radius of curvature (Rc) of a tread surface in a center region is in a range of greater than 55% but 70% or less of a tire maximum width (W) where, on the tread surface at a tire widthwise cross-section of each tire in a load-free state that was assembled with a rim and inflated to a prescribed internal pressure, a region that is centered at the tire equator and comes into contact with the ground during straight running is defined as the center region and regions on each side of the center region are defined as shoulder regions, and
the height (h2) of the bead fillers (4) is 40% or less of the side height (h1); wherein
the side height (h1) is the height from a bead baseline (BL) to a tire maximum width position; and
the height (h2) of the bead fillers (4) means the height along the tire radial direction from a tire radial-direction outer end (1a) of the respective bead cores (1) in contact with the bead fillers (4) to a tire radial-direction outer end (4a) of the respective bead fillers (4);
**characterized in that**:
the thickness of the side wall portions (12) is 4 to 6 mm, wherein the thickness of the side wall portions (12) means the thickness of each side wall portion (12) that is measured in a direction perpendicular to the tire surface at a position of a tire radial-direction midpoint of the side height (h1) ± 10% of the side height (h1).

2. The three-wheeled vehicle tire (10) according to claim 1, wherein a ratio between the radius of curvature (Rc) of the tread surface in the center region and a radius of curvature (Rs) of the tread surface in the shoulder regions, Rc/Rs, is not higher than 145%.

3. The three-wheeled vehicle tire (10) according to claim 1, wherein the height (h3) of a folded part (2A) of a carcass ply (2) is greater than 50% and 75% or less of the side height (h1), wherein the height (h3) of the folded part (2A) of the carcass ply (2) means the height from the bead baseline (BL) to a tire radial-direction outer end (2a) of the folded part (2A) of the carcass ply (2).

4. The three-wheeled vehicle tire (10) according to claim 1, wherein the arrangement width (wb) of a spiral belt (3) is 85% or less of the peripheral length (wp) of the tread surface, wherein the arrangement width (wb) of the belt refers to the length measured along the tread surface between the tire widthwise ends of the belt.

5. Use of the three-wheeled vehicle tire (10) according to any one of claims 1 to 4 for mounting on a two-wheel side of a three-wheeled vehicle that is constituted by two front wheels and one rear wheel or one front wheel and two rear wheels and comprising a mechanism for tilting a tire(s) during turning.

## Patentansprüche

1. Reifen (10) für ein dreirädriges Fahrzeug, der auf einer zweirädrigen Seite eines dreirädrigen Fahrzeugs zu montieren ist, das aus zwei Vorderrädern und einem Hinterrad oder einem Vorderrad und zwei Hinterrädern besteht und einen Mechanismus zum Neigen von (einem) Reifen während des Abbiegens umfasst,
wobei ein Krümmungsradius (Rc) einer Lauffläche in einem Mittelbereich in einem Bereich von mehr als 55 %, aber 70 % oder weniger, einer Reifenhöchstbreite (W) liegt, wobei, auf der Lauffläche in einem Reifenbreitenrichtungsquerschnitt jedes Reifens in einem lastfreien Zustand, der mit einer Felge montiert und auf einen vorgeschriebenen Innendruck aufgeblasen wurde, ein Bereich, der an dem Reifenäquator zentriert ist und während des Geradeauslaufs in Berührung mit dem Boden kommt, als der Mittelbereich definiert ist und Bereiche auf beiden Seiten des Mittelbereichs als Schulterbereiche definiert sind, und
die Höhe (h2) der Kernreiter (4) 40 % oder weniger der Seitenhöhe (h1) beträgt, wobei
die Seitenhöhe (h1) die Höhe von einer Wulstgrundlinie (BL) bis zu einer Reifenhöchstbreitenposition ist; und
die Höhe (h2) der Kernreiter (4) die Höhe entlang der Reifenradialrichtung von einem in Reifenradialrichtung äußeren Ende (1a) der jeweiligen Wulstkerne (1) in Berührung mit den Kernreitern (4) bis zu einem in Reifenradialrichtung äußeren Ende (4a) der jeweiligen Kernreiter (4) bedeutet;
**dadurch gekennzeichnet, dass**:
die Dicke der Seitenwandabschnitte (12) 4 bis 6 mm beträgt, wobei die Dicke der Seitenwandabschnitte (12) die Dicke jedes Seitenwandabschnitts (12) bedeutet, die in einer Richtung, senkrecht zu der Reifenoberfläche, an einer Position eines Mittelpunkts der Seitenhöhe (h1) ±10% in Reifenradialrichtung gemessen wird.

2. Reifen (10) für ein dreirädriges Fahrzeug nach Anspruch 1, wobei ein Verhältnis zwischen dem Krümmungsradius (Rc) der Lauffläche in dem Mittelbereich und einem Krümmungsradius (Rs) der Lauffläche in den Schulterbereichen, Rc/Rs nicht höher als 145 % ist.

3. Reifen (10) für ein dreirädriges Fahrzeug nach Anspruch 1, wobei die Höhe (h3) eines umgeschlagenen Teils (2A) einer Karkassenlage (2) mehr als 50 % und 75 % oder weniger der Seitenhöhe (h1) beträgt, wobei die Höhe (h3) des umgeschlagenen Teils (2A) der Karkassenlage (2) die Höhe von der Wulstgrundlinie (BL) bis zu einem in Reifenradialrichtung äußeren Ende (2a) des umgeschlagenen Teils (2A) der Karkassenlage (2) bedeutet.

4. Reifen (10) für ein dreirädriges Fahrzeug nach Anspruch 1, wobei die Anordnungsbreite (wb) eines Spiralgürtels (3) 85 % oder weniger der Umfangslänge (wp) der Lauffläche beträgt, wobei sich die die Anordnungsbreite (wb) des Gürtels auf die Länge, gemessen entlang der Lauffläche zwischen den Enden des Gürtels in Reifenbreitenrichtung, bezieht.

5. Verwendung des Reifens (10) für ein dreirädriges Fahrzeug nach einem der Ansprüche 1 bis 4 zum Montieren auf einer zweirädrigen Seite eines dreirädrigen Fahrzeugs, das aus zwei Vorderrädern und einem Hinterrad oder einem Vorderrad und zwei Hinterrädern besteht und einen Mechanismus zum Neigen von (einem) Reifen während des Abbiegens umfasst.

## Revendications

1. Bandage pneumatique (10) pour véhicule à trois roues destiné à être monté sur un côté à deux roues d'un véhicule à trois roues, constitué par deux roues avant et une roue arrière ou une roue avant et deux roues arrière, et comprenant un mécanisme pour incliner un (des) bandages(s) pneumatique(s) au cours de la rotation,
dans lequel un rayon de courbure (Rc) d'une surface de bande de roulement dans une région centrale est compris dans un intervalle représentant plus de 55% mais 70% ou moins d'une largeur maximale (W) du bandage pneumatique, dans lequel, sur la bande de roulement, au niveau d'une section transversale, dans le sens de la largeur du bandage pneumatique, de chaque bandage pneumatique, dans un état sans charge et lors de l'assemblage avec une jante et du gonflement à une pression interne prescrite, une région centrée au niveau de l'équateur du bandage pneumatique et entrant en contact avec le sol au cours d'un roulement en ligne droite, est définie comme région centrale, des régions sur chaque côté de la région centrale étant définies comme régions d'épaulement, et
la hauteur (h2) de bourrages sur tringle (4) représente 40% ou moins de la hauteur de flanc (h1) ; dans lequel
la hauteur de flanc (h1) est la hauteur allant d'une ligne de base de talon (BL) vers une position à largeur maximale du bandage pneumatique ; et
la hauteur (h2) des bourrages sur tringle (4) désigne la hauteur le long de la direction radiale du bandage pneumatique, d'une extrémité externe (la) dans la direction radiale du bandage pneumatique des tringles respectives (1) en contact avec les bourrages sur tringle (4) vers une extrémité externe (4a), dans la direction radiale du bandage pneumatique, des bourrages sur tringle respectifs (4) ;
**caractérisé en ce que** :
l'épaisseur des parties de flanc (12) est comprise entre 4 et 6 mm, l'épaisseur des parties de flanc (12) désignant l'épaisseur de chaque partie de flanc (12) mesurée dans une direction perpendiculaire à la surface du bandage pneumatique, au niveau d'une position d'un point médian, dans la direction radiale du bandage pneumatique, de la hauteur de flanc (h1)± 10% de la hauteur de flanc (h1).

2. Bandage pneumatique (10) pour véhicule à trois roues selon la revendication 1, dans lequel un rapport entre le rayon de courbure (Rc) de la surface de bande de roulement dans la région centrale et un rayon de courbure (Rs) de la surface de bande de roulement dans les régions d'épaulement, Rc/Rs, n'est pas supérieur à 145%.

3. Bandage pneumatique (10) pour véhicule à trois roues selon la revendication 1, dans lequel la hauteur (h3) d'une partie pliée (2A) d'une nappe de carcasse (2) représente plus de 50% et 75% ou moins de la hauteur de flanc (h1), dans lequel la hauteur (h3) de la partie pliée (2A) de la nappe de carcasse (2) désigne la hauteur allant de la ligne de base de talon (BL) vers une extrémité externe (2a), dans la direction radiale du bandage pneumatique, de la partie pliée (2A) de la nappe de carcasse (2).

4. Bandage pneumatique (10) pour véhicule à trois roues selon la revendication 1, dans lequel la largeur d'agencement (wb) d'une ceinture en spirale (3) représente 85% ou moins de la longueur périphérique (wp) de la surface de bande de roulement, la largeur d'agencement (wb) de la ceinture se référant à la longueur mesurée le long de la surface de bande de roulement entre les extrémités, dans le sens de la largeur du bandage pneumatique, de la ceinture.

5. Utilisation du bandage pneumatique (10) pour véhicule à trois roues selon l'une quelconque des revendications 1 à 4 pour le montage sur un côté à deux roues d'un véhicule à trois roues, constitué par deux roues avant et une roue arrière ou une roue avant et deux roues arrière, et comprenant un mécanisme pour incliner le(s) bandage(s) pneumatique(s) au cours de la rotation.
